# EUROPÄISCHE PATENTSCHRIFT

(11) **EP 3 010 750 B1**
(45) Veröffentlichungstag und Bekanntmachung des Hinweises auf die Patenterteilung: **27.03.2019**
(21) Anmeldenummer: 14728914.4
(22) Anmeldetag: 03.06.2014
(51) Int. Cl.: B60L 11/18, H01M 10/613, H01M 10/617, H01M 10/625, H01M 10/633, H01M 10/635, H01M 10/6569, H01M 10/663

(54) **VERFAHREN UND STEUERGERÄT ZUR OPTIMIERUNG DER KÜHLUNG EINES HOCHVOLTSPEICHERS DURCH EINE KLIMAANLAGE**
METHOD AND CONTROL DEVICE FOR OPTIMIZING COOLING OF A HIGH VOLTAGE ACCUMULATOR BY MEANS OF AN AIR-CONDITIONING SYSTEM
PROCÉDÉ ET APPAREIL DE COMMANDE POUR OPTIMISER LE REFROIDISSEMENT D'UN ACCUMULATEUR HAUTE TENSION AU MOYEN D'UNE CLIMATISATION

(30) Priorität: 17.06.2013 DE 102013211259
(43) Veröffentlichungstag der Anmeldung: 27.04.2016
(73) Patentinhaber: Bayerische Motoren Werke Aktiengesellschaft, 80809 München (DE)
(72) Erfinder: BERG, Karsten, 82319 Starnberg (DE); EISELE, Marc-Thomas, 80333 München (DE); FLAHAUT, Nicolas, 81373 München (DE); MEIJERING, Alexander, 80807 Muenchen (DE); SIERING, Sebastian, 80333 München (DE)
(86) Internationale Anmeldenummer: PCT/EP2014/061425
(87) Internationale Veröffentlichungsnummer: WO 2014/202377

(56) Entgegenhaltungen:
- EP-A1- 2 072 296
- WO-A1-2012/003209
- DE-A1- 19 930 148
- US-A- 6 138 466

## Beschreibung

Die vorliegende Erfindung betrifft das Kühlen von Hochvoltspeichern in elektrisch antreibbaren Fahrzeugen. Insbesondere betrifft die vorliegende Erfindung Verbesserungen bei der Steuerung eines Kältemittelstroms durch den Verdampfer, welcher zum Kühlen des Hochvoltspeichers eingerichtet ist.

Aus der EP 2 072 296 B1 ist eine Vorrichtung zur Kühlung einer Wärmequelle eines Kraftfahrzeugs bekannt, umfassend einen Kältekreis mit einem Verdichter zur Verdichtung eines Kältemittels, ein einen Kondensator umfassendes Kondensatorglied zur nachfolgenden Kühlung des Kältemittels und ein Expansionsorgan und einen mit der Wärmequelle in Wärmeaustausch stehenden Verdampfer des Kältekreises.

Gerade in Elektrofahrzeugen und Hybridfahrzeugen wird sehr oft auf Lithium-Ion-Batterien als Energiespeicher zurückgegriffen. Dabei ist das thermische Management von Lithium-Ion-Batterien ein wichtiger Faktor für die Lebensdauer und die Leistungsfreigabe der Batterie. So darf beispielsweise die Spreizung der Temperatur zwischen den Batteriezellen einen gewissen Differenzbetrag nicht überschreiten, während ebenso eine maximale Temperatur aller Zellen eingehalten werden muss. Diese Anforderungen sind auch bei großen Schwankungen im Außentemperaturbereich zu erfüllen. So kann beispielsweise für Automobile gefordert werden, dass die Lithium-Ion-Batterien bei einem Außentemperaturbereich von -10° bis +40°C voll funktionsbereit zur Verfügung steht.

Bei kalten Temperaturen unterhalb des Gefrierpunkts entstehen möglicherweise kritische Zustände in einem Kältekreislauf, der zu ungenügender Kühlung bzw. Überschreitung obiger Grenzwerte führen kann. Da sich bei winterlichen Bedingungen stets ein sehr kleines Druckgefälle im Kältekreislauf einstellt, ist dementsprechend ein sehr kleiner Massenstrom an Kühlfluid vorhanden. Bei konstanter Kälteleistung eines Kühlers entsteht somit eine hohe Überhitzung des Kühlfluids. Diese Überhitzung führt jedoch zu einer teilung innerhalb der Batteriezellen, da sich die Temperatur des Kühlfluids zwischen dem Einlass und dem Auslass des Kühlers deutlich unterscheidet. So kann sich beispielsweise eine starke Überhitzung der am weitesten stromabwärts im Kühlkreislauf angeordneten Batteriezellen ergeben.
Es ist daher eine Aufgabe der vorliegenden Erfindung, einen zuverlässigen Betrieb eines durch eine Klimaanlage gekühlten Hochvoltspeichers auch bei niedrigen Umgebungstemperaturen zu gewährleisten.

Gelöst wird diese Aufgabe durch ein Verfahren mit den Merkmalen gemäß Anspruch 1 sowie durch ein Steuergerät mit den Merkmalen gemäß Anspruch 7. Erfindungsgemäß wird ein Verfahren zur Optimierung der Kühlung eines Hochvoltspeichers durch eine Klimaanlage in einem Fortbewegungsmittel vorgeschlagen. Das Fortbewegungsmittel kann dabei beispielsweise ein, insbesondere elektrisch antreibbarer, Pkw sein. Grundsätzlich kommen jedoch auch andere Fortbewegungsmittel in Frage, welche über einen elektrochemischen Hochvoltspeicher angetrieben werden können. Das erfindungsgemäße Verfahren weist dabei als ersten Schritt ein Erkennen eines zu geringen Kältemittelstromes durch einen Verdampfer für den Hochvoltspeicher auf. Ein zu geringer Kältemittelstrom führt dabei (wie eingangs beschrieben) zu einer zu geringen Wärmeabfuhr und insbesondere zu einer zu großen Spreizung der Temperaturverteilung innerhalb der Speicherzellen des Hochvoltspeichers. Im Ansprechen darauf wird als zweiter Schritt ein, insbesondere automatisches, Verringern von Wärmeverlusten innerhalb eines Kondensators der Klimaanlage zur Erhöhung des Kältemittelstromes vorgeschlagen. Da insbesondere bei niedrigen Außentemperaturen der Kältemittelstrom aufgrund einer zu geringen Temperaturdifferenz im Bereich des Kondensators drastisch abnimmt, kann auf diese Weise die Temperaturdifferenz erhöht werden und eine adäquate Kühlung des Hochvoltspeichers durch einen thermisch mit dem Hochvoltspeicher gekoppelten Verdampfer gewährleistet werden. Für ein Verringern von Wärmeverlusten kommen erfindungsgemäß unterschiedliche Maßnahmen in Frage, die vorzugsweise ohne separate Anwenderinteraktion, also automatisch, vorgenommen werden. Dabei sei unter einem "Wärmeverlust" des Kondensators im Rahmen der Erfindung insbesondere die Wärmeverlustbilanz innerhalb des Kondensators verstanden. Mit anderen Worten kann eine erhöhte Wärmeabgabe des Kondensators erfindungsgemäß durch eine erhöhte Wärmezufuhr kompensiert werden. Im Rahmen der möglichen Maßnahmen werden dabei bevorzugt solche Möglichkeiten favorisiert, welche eine kostengünstige und betriebssichere Implementierung im Serieneinsatz ermöglichen.

Die Unteransprüche haben bevorzugte Weiterbildungen der Erfindung zum Inhalt.

Bevorzugt erfolgt das Erkennen des zu geringen Kältemittelstroms im Ansprechen auf unterschiedliche Erkenntnisse. Eine erste erfindungsgemäße Möglichkeit besteht darin, ein Überschreiten einer vordefinierten Temperatur innerhalb des Hochvoltspeichers zu ermitteln. Hierzu kommen unterschiedliche Verfahren in Frage, welche im Stand der Technik grundsätzlich bekannt sind. Beispielsweise ist ein Messen elektrischer Kenngrößen des Hochvoltspeichers, ein Auswerten eines Thermoelementes, ein Auswerten eines Infrarotsensors o.Ä. erfindungsgemäß möglich. Auch Schätzverfahren basierend auf Erfahrungswerten können unter Berücksichtigung eines Betriebszustandes des Fortbewegungsmittels bzw. des Hochvoltspeichers zum Einsatz gelangen. Alternativ oder zusätzlich kann in ähnlicher Weise eine Überschreitung einer vordefinierten Temperaturspreizung zwischen Speicherzellen innerhalb des Hochvoltspeichers ermittelt werden. Mit anderen Worten wird eine Temperaturdifferenz zwischen einer ersten und einer zweiten Speicherzelle ermittelt und mit einem vordefinierten Schwellwert verglichen. Alternativ oder zusätzlich kann ein Unterschreiten einer vordefinierten Temperaturdifferenz zwischen einem Kältemittel der Klimaanlage und einer den Kondensator umströmenden Umgebungsluft ermittelt werden. Dabei kann beispielsweise die Umgebungsluft gemessen und mit messtechnisch oder empirisch ermittelten Kältemitteltemperaturen innerhalb der Klimaanlage verglichen werden. Dabei kann erfahrungsbasiert und in Abhängigkeit eines aktuellen Betriebszustandes des Hochvoltspeichers prognostiziert werden, dass ein resultierender Kältemittelstrom zur Sicherstellung einer adäquaten Wärmeabfuhr aus dem Hochvoltspeicher erfindungsgemäße Maßnahmen erforderlich macht. Die vorstehend genannten Maßnahmen stellen vorteilhafte und messtechnisch einfach zu ermittelnde Erkenntnisse zur Verfügung, im Ansprechen worauf eine erfindungsgemäße Reaktion vorteilhafterweise erfolgen kann.

Bevorzugt wird zum Verringern von Wärmeverlusten zumindest ein Teil des Kältemittelstromes zumindest an einem Teil des Kondensators der Klimaanlage vorbeigeleitet. Mit anderen Worten erfolgt eine Abzweigung eines Kältemittelstromes an einer solchen Stelle, dass der abgezweigte Teil des Kältemittelstromes nicht die gesamte Kondensatorlänge durchfließt. Insbesondere kann dabei ein Teil des Kältemittelstroms am gesamten Kondensator vorbeigeleitet werden. Dies hat den Vorteil, dass der Kondensator ohne Ventile zur Abzweigung eines Teils des Kältemittelstromes aufgebaut sein kann, was die Bauteilkosten für den Kondensator verringert. Alternativ kann der gesamte Kältemittelstrom an einem Teil des Kondensators vorbeigeleitet werden. Hierzu kann ein im Kondensator angeordnetes Ventil dafür sorgen, dass ein Bypass um den Kondensator kurz und Bauraum sparend ausgeführt werden kann.

Ein alternatives oder zusätzliches Verringern von Wärmeverlusten erfolgt erfindungsgemäß durch ein Verringern eines Umgebungsluftstromes durch den Kondensator. Mit anderen Worten wird das die Wärme aus dem Kondensator abführende Umgebungsfluid derart beeinflusst, dass die Wärmeabfuhr verringert und somit die Kondensatortemperatur erhöht wird. Beispielsweise kann die den Kondensator anströmende Umgebungsluft durch variable Luftleitmittel derart beeinflusst werden, dass ein geringerer Massestrom der Umgebungsluft die Kondensatorfläche anströmt bzw. durchströmt. Für den Fall, dass der Kondensator hinter für andere Zwecke bereits vorgesehene Luftleitmittel angeordnet ist, kann erfindungsgemäß somit ein Steuersignal zur Ansteuerung der Luftleitmittel im Ansprechen auf ein Erkennen eines zu geringen Kältemittelstromes durch den Verdampfer für den Hochvoltspeicher erzeugt werden, im Ansprechen worauf der Durchsatz an Umgebungsluft durch den Kondensator durch die ohnehin verbauten Luftleitmittel verringert wird. Auf diese Weise wird keine zusätzliche Hardware zur Realisierung des erfindungsgemäßen Verfahrens benötigt.

Ein weiterer erfindungsgemäßer Schritt zur Verringerung von Wärmeverlusten innerhalb des Kondensators besteht in einem zusätzlichen Einspeisen von Wärme in den Kondensator. Dies kann beispielsweise durch ein Heizelement erfolgen, welches beispielsweise mit elektrischer oder chemisch gespeicherter Energie (z.B. in Form eines Brennstoffes) betrieben wird. Insbesondere die Verwendung elektrischer Energie ermöglicht dabei eine einfache und sichere Konstruktion sowie einen kostengünstigen Aufbau und Betrieb. Bevorzugt kann auch im Fortbewegungsmittel entstehende Abwärme zur Erwärmung des Kondensators verwendet werden. Beispielsweise kann hierzu eine thermische Kopplung zwischen dem Kondensator und einem Kreislauf zur Abwärmeabfuhr temporär verbessert werden. Ein Beispiel für einen Kreislauf zur Abwärmeabfuhr ist der Kühlwasserkreislauf zur Abwärmeabfuhr eines Antriebsaggregates des Fortbewegungsmittels. Dabei kann die thermische Kopplung einfach durch Verringern eines Abstandes zwischen einem Abschnitt des Kreislaufes und dem Kondensator erfolgen. Alternativ oder zusätzlich kann eine zwischen dem Kreislauf und dem Kondensator befindliche Isolation temporär entfernt oder reduziert werden. Beispielsweise könnte ein zwischen dem Kreislauf und dem Kondensator befindlicher Tank mit einem Wärme transportierenden Fluid (z.B. Wasser) geflutet werden, um die thermische Kopplung zu erhöhen. Alternativ oder zusätzlich kann ein Kühlwasserstrom durch einen mit dem Kondensator thermisch gekoppelten Wärmetauscher des Kühlwasserkreislaufs des Fortbewegungsmittels erhöht werden. Mit anderen Worten könnte der Kühlwasserstrom durch den Wärmetauscher erhöht werden, indem beispielsweise ein Bypass des Wärmetauschers unterbrochen wird und somit der gesamte den Kühlwasserkreislauf durchlaufende Kühlwasserstrom nun auch den Wärmetauscher durchfließt. Die vorgenannten Maßnahmen zum zusätzlichen Einspeisen von Wärme verringern erfindungsgemäß die Wärmeverlustbilanz innerhalb des Kondensators und führen bei niedrigen Außentemperaturen zu einer besser geeigneten Temperaturdifferenz zum Kondensator.

Weiter bevorzugt kann die erfindungsgemäß verwendete Klimaanlage zusätzlich zur Beeinflussung des Klimas in einem Insassen-Aufenthaltsbereich des Fortbewegungsmittels verwendet werden. Mit anderen Worten werden zwei parallele Zweige des Kältemittelkreislaufs verwendet, um einerseits die Innenraumluft bzw. deren Temperatur zu beeinflussen, andererseits eine erfindungsgemäße Kühlung des Hochvoltspeichers des Fortbewegungsmittels zu bewirken. Dies ermöglicht eine kostensparende Implementierung für das erfindungsgemäße Verfahren und senkt Gewicht und Bauraum bei der Kühlung des Hochvoltspeichers.

Gemäß einem weiteren Aspekt der vorliegenden Erfindung wird ein Steuergerät für ein Fortbewegungsmittel, insbesondere ein Personenkraftwagen (PKW), zur Optimierung der Kühlung eines Hochvoltspeichers durch eine Klimaanlage des Fortbewegungsmittels vorgeschlagen. Mit anderen Worten ist das Steuergerät eingerichtet, das oben beschriebene erfindungsgemäße Verfahren durchzuführen. Hierzu erhält es Eingabegrößen zur Erkennung eines zu geringen Kältemittelstromes, insbesondere durch den Verdampfer für den Hochvoltspeicher. Diese Eingabegrößen können beispielsweise Messergebnisse oder erfahrungsbasierte Kenngrößen sein, die eine aktuelle oder prognostizierte Temperaturermittlung ermöglichen. Weiter ist das Steuergerät erfindungsgemäß eingerichtet, Ausgabegrößen zu erzeugen, um auf die Eingabegrößen erfindungsgemäß zu reagieren. Unter Ausgabegrößen seien solche Signale verstanden, welche zum Verringern von Wärmeverlusten innerhalb eines Kondensators der Klimaanlage und somit zur Erhöhung des Kältemittelstromes geeignet sind. Beispielsweise kann dies eine Ansteuerung eines Ventils zur Umleitung eines Kältemittelstromes um den Kondensator umfassen. Alternativ oder zusätzlich können Aktuatoren zur Verstellung variabler Luftleitmittel angesteuert werden. Schließlich sind die Ausgabegrößen alternativ oder zusätzlich geeignet, eine Wärmeeinspeisung in dem Kondensator auszulösen. Dies kann beispielsweise durch Ansteuerung von Schaltmitteln geschehen, welche ein elektrisches Heizelement am Kondensator mit elektrischer Energie versorgen. Alternativ oder zusätzlich können die Ausgabegrößen Aktuatoren ansteuern, welche eine thermische Kopplung zwischen einem Kühlwasserkreislauf und dem Kondensator begünstigen. Weiter können alternativ oder zusätzlich die Ausgabegrößen eine Erhöhung eines Kühlwasserstromes durch einen mit dem Kondensator thermisch gekoppelten Wärmetauscher ermöglichen, indem beispielsweise Ventile eines Bypasses des Wärmetauschers entsprechend angesteuert werden.

Weitere Einzelheiten, Merkmale und Vorteile der Erfindung ergeben sich aus der nachfolgenden Beschreibung und den Figuren. Es zeigen:
- Figur 1: eine schematische Draufsicht auf ein Fortbewegungsmittel mit einer Klimaanlage, welche zur Kühlung eines Hochvoltspeichers eingerichtet ist;
- Figur 2: eine schematische Draufsicht auf einen durch Luftleitmittel abschirmbaren Kondensator bei geöffneten Luftleitmitteln;
- Figur 3: eine schematische Draufsicht auf ein Ausführungsbeispiel auf einen durch Luftleitmittel abschirmbaren Kondensator bei geschlossenen Luftleitmitteln;
- Figur 4: ein schematisches Schaubild eines Ausführungsbeispiels zur Leitung eines Kältemittelstroms vorbei an einem Teil eines Kondensators;
- Figur 5: ein schematisches Schaubild eines Ausführungsbeispiels zur Leitung eines Teils eines Kältemittelstroms vorbei an einem Kondensator;
- Figur 6: ein schematisches Schaubild eines Ausführungsbeispiels zur erfindungsgemäßen Verwendung eines Kühlwasserkreislaufes bei der Verringerung von Wärmeverlusten; und
- Figur 7: ein Flussdiagramm, visualisierend Schritte eines Ausführungsbeispiels eines erfindungsgemäßen Verfahrens.

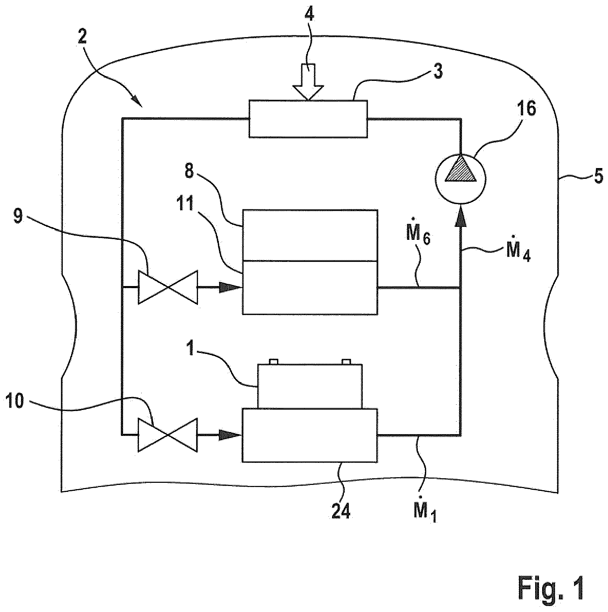

Figur 1 zeigt eine Draufsicht auf Komponenten eines Fahrzeugs 5, in welchem eine Klimaanlage 2 zur Kühlung eines Hochvoltspeichers 1 eingerichtet ist. Umgebungsluft 4 durchströmt einen Kühlergrill des Fahrzeugs 5 und führt dabei Wärme aus einem Kondensator 3 der Klimaanlage 2 ab. Die Klimaanlage 2 umfasst dabei zwei parallele Zweige, wobei ein Massestrom M₁ zur Kühlung eines Hochvoltspeichers 1 mittels eines Verdampfers 24 durch ein Expansionsventil 10 gesteuert werden kann. In einem zweiten Zweig kann ein Kältemittelstrom M₆ zur Kühlung der Luft innerhalb der Fahrgastzelle 8 mittels eines zweiten Verdampfers 11 durch ein zweites Expansionsventil 9 gesteuert werden. Die Kältemittelströme M₁, M₆ werden anschließend zu einem gemeinsamen Kältemittelstrom M₄ zusammengefasst, welcher durch einen Verdichter 16 verdichtet wird und anschließend den Kondensator 3 erneut durchfließt. Wenn zwischen der Umgebungsluft 4 und dem Kältemittel der Klimaanlage 2 innerhalb des Kondensators 3 eine bestimmte Temperaturdifferenz unterschritten wird, ist der Kältemittelstrom M₁ nicht mehr hoch genug, um eine vordefinierte maximale Temperaturspreizung zwischen den Speicherzellen des Hochvoltspeichers 1 einzuhalten. Zusätzlich kann auch die generelle Kühlleistung des Verdampfers 24 für den Hochvoltspeicher 1 im Ganzen hinter der erforderten Kühlleistung zurückbleiben. In Verbindung mit den nachfolgenden Figuren werden daher Maßnahmen vorgeschlagen, durch welche erfindungsgemäß Wärmeverluste innerhalb des Kondensators 3 verringert werden können.

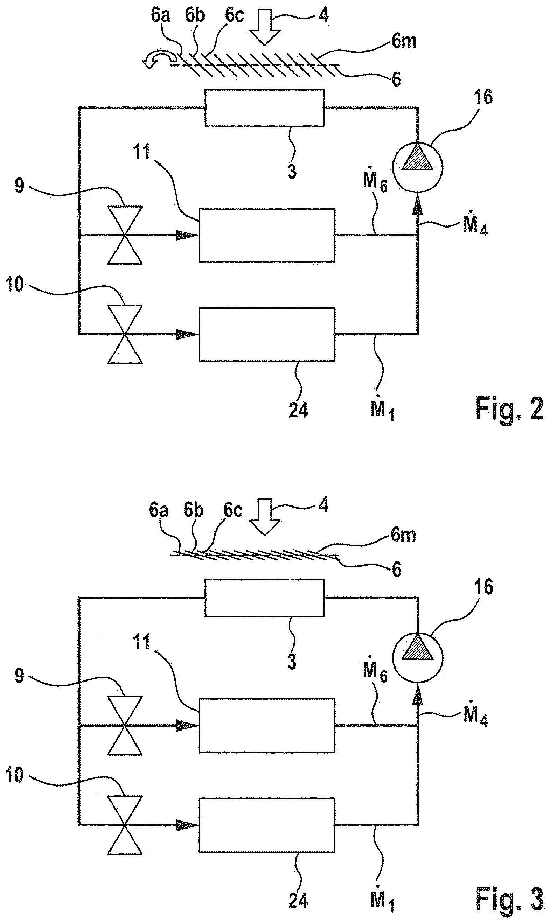

Figur 2 zeigt ein schematisches Schaubild, in welchem ein Kondensators 3 durch eine Vielzahl stellbarer Lamellen 6a, 6b, 6c, ... 6m als Luftleitmittel 6 gegenüber ihn anströmender Umgebungsluft 4 abschirmbar ist. Hierzu sind die Lamellen 6a, 6b, 6c, .... 6m in Fahrtrichtung vor dem Kondensator 3 angeordnet, so dass sie zwangsläufig von der Umgebungsluft 4 durchströmt werden müssen, bevor die Umgebungsluft 4 Wärme vom Kondensator 3 abführen kann. Die übrigen Komponenten entsprechen den in Verbindung mit Figur 1 diskutierten Merkmalen.

Figur 3 zeigt die in Figur 2 dargestellte Anordnung, nachdem innerhalb eines (nicht dargestellten) Hochvoltspeichers 1 eine übermäßige Erwärmung und/oder Temperaturspreizung festgestellt worden ist. Erfindungsgemäß wurde daher ein Steuersignal ausgesendet, welches zu einer Ansteuerung von (nicht dargestellten) Aktuatoren geführt hat, welche die Lamellen 6a, 6b, 6c, .... 6m der Luftleitmittel 6 verdreht hat, so dass sie eine geschlossene Fläche zur Abschirmung des Kondensators 3 gegenüber der Umgebungsluft 4 ausbilden. Auf diese Weise wird der Kondensator 3 weniger stark entwärmt, so dass eine Temperaturdifferenz zwischen der Umgebungsluft 4 und dem Kältemittel innerhalb des Kondensators 3 erfindungsgemäß künstlich erhöht wurde.

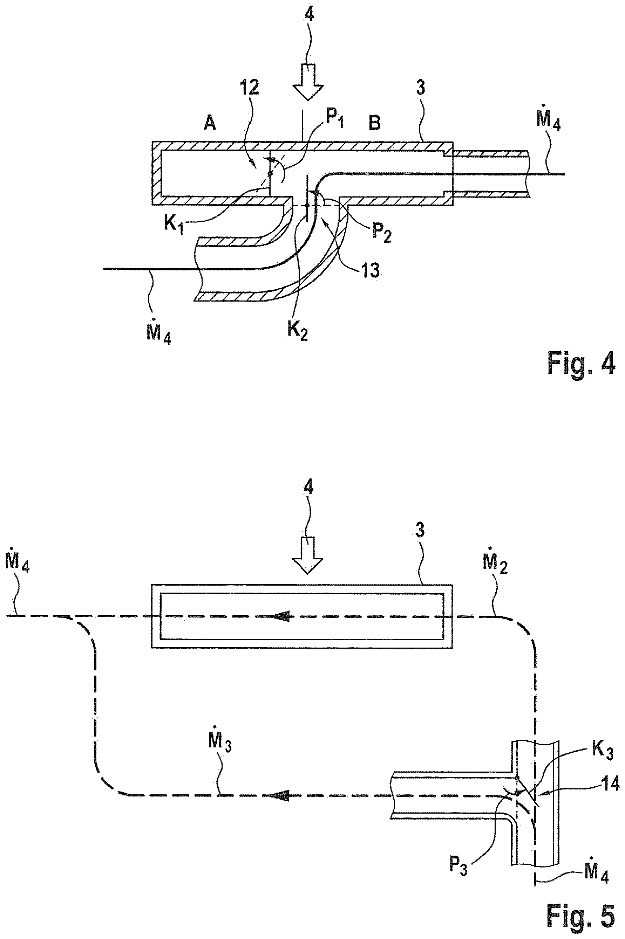

Figur 4 zeigt ein schematisches Schaubild zur Veranschaulichung einer alternativen Maßnahme zur Verringerung von Wärmeverlusten innerhalb des Kondensators 3. Hierzu weist der Kondensator 3 ein erstes Ventil 12 auf, welches einen in den Kondensator 3 einfließenden Kältemittelstrom M₄ weiterleiten oder blockieren kann. Durch Drehung einer ersten Klappe K₁ des Ventils 12 in Richtung eines Pfeils P₁ verwehrt das Ventil 12 in der dargestellten Stellung dem Massestrom M₄ ein Durchfließen des Teils A des Kondensators 3, so dass lediglich ein Teil B des Kondensators 3 vom Kältemittelstrom M₄ durchflossen wird. Der Kältemittelstrom M₄ wird durch eine zweite Klappe K₂ eines zweiten Ventils 13 vor seinem Eintritt in den Teil A des Kondensators 3 aus dem Kondensator 3 herausgeleitet. Hierzu ist die zweite Klappe K₂ des zweiten Ventils 13 in Richtung des Pfeils P₂ gedreht, so dass sie einen Auslass am Ende des Teils B des Kondensators 3 freigibt. Den Kondensator 3 anströmende Umgebungsluft 4 wird somit lediglich zur Wärmeabfuhr des den Teil B durchfließenden Kältemittels führen, so dass die Leistung des Kondensators 3 erfindungsgemäß verringert wird.

Figur 5 zeigt schematisch einen alternativen Aufbau zur Steuerung der Kälteleistung des Kondensators 3. Ein Kältemittelstrom M₄ wird durch ein Ventil 14 teilweise durch einen Kondensator 3 einer erfindungsgemäß ausgestalteten Klimaanlage 2 geleitet. Daher kühlt Umgebungsluft 4 einen den Kondensator 3 durchfließenden Massestrom M₂, während ein mittels des Ventils 14 und seiner in Richtung des Pfeils P₃ geschwenkten Klappe K₃ abgezweigter Massestrom M₃ einen Bypass zum Kondensators 3 durchfließt und erst hinter dem Kondensator 3 wieder mit dem Massestrom M₂ vereint wird. Indem auf diese Weise die Kälteleistung des Kondensators 3 verringert wird, erhöht sich im Ergebnis eine Temperaturdifferenz zwischen der Umgebungsluft 4 und einem die Klimaanlage 2 durchströmendem Kältemittel.

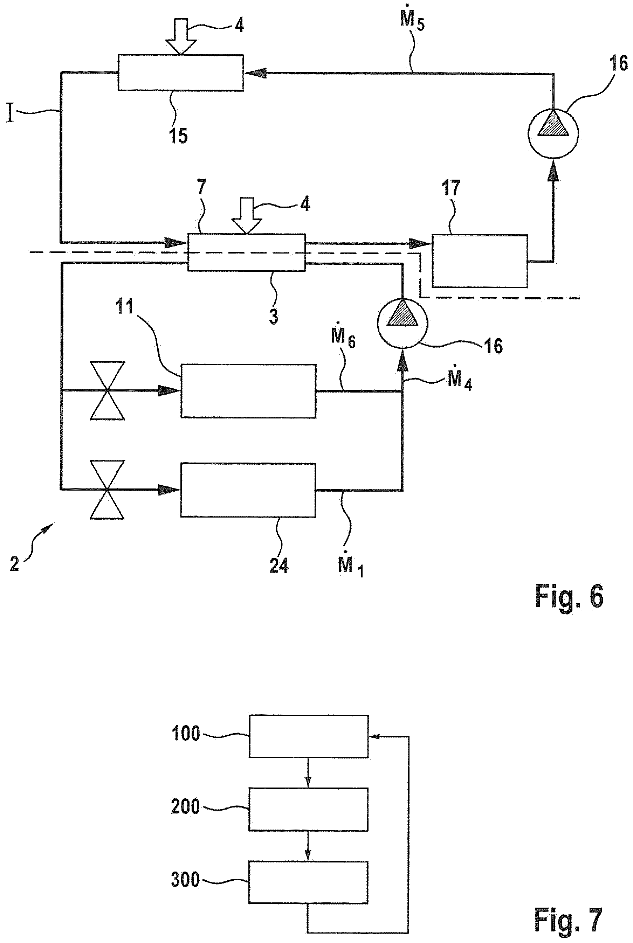

Figur 6 zeigt schematisch eine alternative bzw. zusätzliche erfindungsgemäße Maßnahme zur Verringerung einer Entwärmung des Kondensators 3. Dabei handelt es sich um einen Kühlwasserkreislauf I, in welchem ein Kühlwasserstrom M₅ durch eine Wasserpumpe 16 umgewälzt wird. Das Kühlwasser durchströmt dabei einen Nieder-Temperatur-Kühler 15, in welchem es Wärme an die Umgebungsluft 4 abgibt. Das abgekühlte Kühlwasser durchströmt anschließend einen Wärmetauscher 7 in Form eines wassergekühlten Kondensators, durch welchen erfindungsgemäß ein Abschnitt des Kühlwasserkreislaufs I thermisch mit dem Kondensator 3 einer Klimaanlage 2 gekoppelt ist. Dabei gibt der Kühlwasserstrom M₅ Restwärme an das Kältemittel innerhalb des Kondensators 3 ab. Anschließend durchfließt der Kühlwasserstrom M₅ bestimmungsgemäß unterschiedliche Kühler (z.B. Kühler einer Antriebsmaschine (EME), Ladeluft-Kühler, diverse NT-Kühler), die symbolisch in einer Einheit 17 zusammengefasst sind. Der Kühlwasserkreislauf I schließt sich, indem der Kühlwasserstrom M₅ anschließend erneut die Wasserpumpe 16 durchfließt. Zur Regelung des Wärmeübertrags zwischen dem Kühlwasserkreislauf I und dem Kondensator 3 sind unterschiedliche Maßnahmen denkbar, wobei die folgende Nennung möglicher Beispiele keinen Anspruch auf Vollständigkeit erhebt. Eine Möglichkeit besteht darin, den Wärmetauscher 7 mit einem verminderten Kühlwasserstrom M₅ durchfließen zu lassen. Dies kann beispielsweise durch einen den Wärmetauscher 7 kurzschließenden regelbaren Bypass (nicht dargestellt) geschehen. Dabei kann eine der in Figur 5 dargestellten Anordnung entsprechende Anordnung für den Wärmetauscher 7 verwendet werden. Alternativ könnte auch eine der in Figur 4 dargestellten Anordnung entsprechende Anordnung für den Wärmetauscher 7 verwendet werden. Alternativ könnte eine thermische Kopplung zwischen dem Wärmetauscher 7 und dem Kondensator 3 erhöht werden, indem eine thermische Isolierung zwischen beiden temporär verringert wird. Beispielsweise kann ein zwischen dem Wärmetauscher 7 und dem Kondensator 3 angeordneter Tank (der zuvor leer war oder zumindest einen geringeren Füllstand aufwies) mit einer wärmeleitenden Flüssigkeit (z.B. Wasser) gefüllt werden. Alternativ kann die räumliche Nähe zwischen dem Wärmetauscher 7 und dem Kondensator 3 beispielsweise durch einen (nicht dargestellten) Stellmotor verringert werden, so dass die thermische Kopplung beider Komponenten erhöht wird. Alternativ oder zusätzlich kann die in Figur 6 dargestellte Anordnung mit den in den Figuren 2 bis 5 dargestellten Anordnungen kombiniert werden. Mit anderen Worten kann zusätzlich zur Verwendung des Kühlwasserkreislaufes I ein Umgebungsluftstrom 4 mittels Luftleitmitteln 6 gesteuert und/oder die Entwärmeleistung des Kondensators 3 durch geeignete Bypässe (siehe Figuren 4 und 5) verringert werden.

Figur 7 zeigt ein Flussdiagramm, veranschaulichend Schritte eines Ausführungsbeispiels eines erfindungsgemäßen Verfahrens. In Schritt 100 wird eine Überschreitung einer vordefinierten Temperatur und/oder einer vordefinierten Temperaturspreizung ermittelt. Alternativ oder zusätzlich wird ein Unterschreiten einer vordefinierten Temperaturdifferenz zwischen einem Kältemittel der Klimaanlage und einer den Kondensator umströmenden Umgebungsluft detektiert. Anschließend wird in Schritt 200 erkannt, dass hieraus ein zu geringer Kältemittelstrom durch einen Verdampfer für den Hochvoltspeicher zu erwarten ist oder bereits besteht. Dabei können in Schritt 200 zudem Betriebskenngrößen des Fortbewegungsmittels bzw. des Hochvoltspeichers involviert und beispielsweise auch eine Nutzungshistorie eines Anwenders des Fortbewegungsmittels ausgewertet werden. Zusammengefasst wird in Schritt 200 das Erfordernis festgestellt, dass der Kältemittelstrom durch den Verdampfer im Bereich des Hochvoltspeichers erhöht werden muss. Anschließend wird in Schritt 300 dafür gesorgt, dass die Wärmeverluste innerhalb des Kondensators der Klimaanlage verringert werden, um den zu geringen Kältemittelstrom zu erhöhen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Hochvoltspeicher
- 2: Klimaanlage
- 3: Kondensator
- 4: Umgebungsluft
- 5: Fahrzeug
- 6: Luftleitmittel
- 6a,b...: Lamellen
- 7: wassergekühlter Kondensator/Wärmetauscher
- 8: Fahrgastzelle
- 9: Expansionsventil
- 10: Expansionsventil
- 11: Verdampfer
- 12: Ventil
- 13: Ventil
- 14: Ventil
- 15: Nieder-Temperatur-Kühler
- 16: Verdichter/(Wasser)pumpe
- 17: Kühler
- 24: Verdampfer
- 100: Schritt
- 200: Schritt
- 300: Schritt
- A/B: Teile des Kondensators
- I: Kühlwasserkreislauf
- K: Klappe
- M: Massestrom/Kältemittelstrom
- P: Pfeile

## Patentansprüche

1. Verfahren zur Optimierung der Kühlung eines Hochvoltspeichers (1) durch eine Klimaanlage (2) in einem Fortbewegungsmittel (5), insbesondere einem Fahrzeug, mit den Schritten:
- Erkennen (200) eines zu geringen Kältemittelstromes (M₁) durch einen Verdampfer (24) für den Hochvoltspeicher (1), wobei der Verdampfer (24) zum Kühlen des Hochvoltspeichers (1) eingerichtet und mit diesem thermisch gekoppelt ist, und im Ansprechen darauf;
- Verringern (300) von Wärmeverlusten innerhalb eines Kondensators (3) der Klimaanlage (2) zur Erhöhung des Kältemittelstromes (M₁), wobei das Verringern von Wärmeverlusten ein zusätzliches Einspeisen von Wärme in den Kondensator (3) umfasst, wobei das zusätzliche Einspeisen von Wärme ein Erhöhen einer thermischen Kopplung zwischen dem Kondensator (3) und einem Kreislauf (I) zur Abwärmeabfuhr umfasst,
**dadurch gekennzeichnet, dass** das zusätzliche Einspeisen von Wärme ein Erhöhen eines Kühlwasserstromes (M₅) durch einen mit dem Kondensator (3) thermisch gekoppelten Bereich eines Wärmetauschers (7) des Kühlwasserkreislaufes (I) des Fortbewegungsmittels (5) umfasst.

2. Verfahren nach Anspruch 1, wobei das Erkennen des zu geringen Kältemittelstromes (M₁) im Ansprechen auf ein Ermitteln (100) einer
- Überschreitung einer vordefinierten Temperatur innerhalb des Hochvoltspeichers (1), und/oder
- Überschreitung einer vordefinierten Temperaturspreizung innerhalb des Hochvoltspeichers (1), und/oder
- Unterschreitung einer vordefinierten Temperaturdifferenz zwischen einem Kältemittel der Klimaanlage (2) und einer den Kondensator (3) umströmenden Umgebungsluft (4)
erfolgt.

3. Verfahren nach Anspruch 1 oder 2, wobei zum Verringern von Wärmeverlusten
- zumindest ein Teil (M₃) des Kältemittelstromes (M₄) zumindest an einem Teil (A) des Kondensators (3) vorbeigeleitet wird, und insbesondere
- ein Teil (M₃) des Kältemittelstromes (M₄) am ganzen Kondensator (3) vorbei geleitet wird, oder
- der gesamte Kältemittelstrom (M₄) an einem Teil (A) des Kondensators (3) vorbeigeleitet wird.

4. Verfahren nach einem der vorstehenden Ansprüche, wobei das Verringern von Wärmeverlusten ein Verringern eines Umgebungsluftstromes (4) durch den Kondensator (3) umfasst.

5. Verfahren nach Anspruch 4, wobei das Verringern eines Umgebungsluftstromes (4) eine Ansteuerung in Vorwärtsrichtung des Fortbewegungsmittels (5) vor dem Kondensator (3) angeordneter variabler Luftleitmittel (6) umfasst.

6. Verfahren nach einem der vorstehenden Ansprüche, wobei die Klimaanlage (2) zusätzlich zur Beeinflussung des Klimas in einem Insassen-Aufenthaltsbereich (8) des Fortbewegungsmittels (5) verwendet wird.

7. Steuergerät für ein Fortbewegungsmittel zur Optimierung der Kühlung eines Hochvoltspeichers (1) durch eine Klimaanlage (2) des Fortbewegungsmittels (5), welches eingerichtet ist,
- Eingabegrößen zu erhalten,
- Ausgabegrößen zu erzeugen, und auf Basis dieser
- ein Verfahren nach einem der vorstehenden Ansprüche durchzuführen.

## Claims

1. A method for optimising the cooling of a high-voltage battery (1) by an air-conditioning system (2) in a means of transportation (5), especially a vehicle, having the steps:
- identifying (200) an excessively low refrigerant flow (M₁) through an evaporator (24) for the high-voltage battery (1), wherein the evaporator (24) is set up for cooling the high-voltage battery (1) and is thermally coupled therewith, and in response thereto;
- reducing (300) heat losses within a condenser (3) of the air-conditioning system (2) to increase the refrigerant flow (M₁), wherein the reduction of heat losses comprises additional feeding-in of heat into the condenser (3), wherein the additional feeding-in of heat comprises an increase in thermal coupling between the condenser (3) and a circuit (I) for dissipating heat,
**characterised in that** the additional feeding-in of heat comprises an increase in a coolant flow (M₅) through a region of a heat exchanger (7) of the coolant circuit (I) of the means of transportation (5), which region is thermally coupled with the condenser (3).

2. A method according to Claim 1, wherein the identification of the excessively low refrigerant flow (M₁) takes place in response to the ascertaining (100) of the
- exceeding of a predefined temperature within the high-voltage battery (1), and/or
- exceeding of a predefined temperature spread within the high-voltage battery (1), and/or
- undershooting of a predefined temperature difference between a refrigerant of the air-conditioning system (2) and ambient air (4) flowing around the condenser (3).

3. A method according to Claim 1 or Claim 2, wherein in order to reduce heat losses
- at least a part (M₃) of the refrigerant flow (M₄) is conducted so as to bypass at least a part (A) of the condenser (3), and especially
- a part (M₃) of the refrigerant flow (M₄) is conducted so as to bypass the entire condenser (3), or
- the entire refrigerant flow (M₄) is conducted so as to bypass part (A) of the condenser (3).

4. A method according to one of the preceding claims, wherein the reduction of heat losses comprises a reduction in an ambient air flow (4) through the condenser (3).

5. A method according to Claim 4, wherein the reduction of an ambient air flow (4) comprises actuation in the forward direction of the means of transportation (5) of variable air guidance means (6) arranged before the condenser (3).

6. A method according to one of the preceding claims, wherein the air-conditioning system (2) is additionally used to influence the climate in an occupant region (8) of the means of transportation (5).

7. A control unit for a means of transportation for optimising the cooling of a high-voltage battery (1) by an air-conditioning system (2) of the means of transportation (5), which is set up
- to obtain input variables,
- to generate output variables, and on the basis thereof
- to perform a method according to one of the preceding claims.

## Revendications

1. Procédé permettant d'optimiser le refroidissement d'un accumulateur haute tension (1) dans une installation de climatisation (2) montée dans un moyen de déplacement (5) en particulier un véhicule comprenant des étapes consistant à :
- identifier (200) un flux de fluide de refroidissement (M₁) trop faible dans un évaporateur (24) pour l'accumulateur haute tension (1), l'évaporateur (24) étant réalisé pour permettre de refroidir l'accumulateur haute tension (1) et étant couplé thermiquement à celui-ci et en réponse,
- réduire (300) les pertes de chaleur à la partie interne d'un condensateur (3) de l'installation de climatisation (2) pour augmenter le flux de fluide de refroidissement (M₁), la réduction des pertes de chaleur comprenant une introduction supplémentaire de chaleur dans le condensateur (3), l'introduction supplémentaire de chaleur comprenant une augmentation d'un couplage thermique entre le condensateur (3) et un circuit (1) permettant l'évacuation de la chaleur dissipée,
**caractérisé en ce que**
l'introduction supplémentaire de chaleur comprend une augmentation du flux d'eau de refroidissement (M₅) dans une zone couplée thermiquement au condensateur (3) d'un échangeur de chaleur (7) du circuit d'eau de refroidissement (1) du moyen de déplacement (5).

2. Procédé conforme à la revendication 1,
selon lequel l'identification d'un flux de fluide de refroidissement trop faible (M₁) s'effectue en réponse à :
- un dépassement d'une température prédéfinie à la partie interne de l'accumulateur haute tension (1), et/ou
- un dépassement écart de température prédéfini à la partie interne de l'accumulateur haute pression (1), et/ou
- un dépassement d'une différence de température prédéfinie entre le fluide de refroidissement de l'installation de climatisation (2) et l'air environnant (4) dans lequel baigne le condensateur (3).

3. Procédé conforme à la revendication 1 ou 2,
selon lequel pour réduire les pertes de chaleur :
- on laisse passer au moins une partie (M₃) du flux de fluide de refroidissement (M₄) sur au moins une partie (A) du condensateur (3) et en particulier,
- on laisse passer une partie (M₃) du flux de fluide de refroidissement (M₄) sur la totalité du condensateur (3), ou
- on laisse passer la totalité du flux de fluide de refroidissement (M₄) sur une partie (A) du condensateur (3).

4. Procédé conforme à l'une des revendications précédentes,
selon lequel la réduction des pertes de chaleur comprend la réduction du flux d'air environnant (4) dans le condensateur (3).

5. Procédé conforme à la revendication 4,
selon lequel la réduction du flux d'air environnant (4) comprend la commande de moyens de guidage d'air variables (6) situés dans la direction de déplacement du moyen de déplacement (5) à l'avant du condensateur (3).

6. Procédé conforme à l'une des revendications précédentes,
selon lequel l'installation de climatisation (2) est en outre utilisée pour agir sur la climatisation dans la zone (8) des passagers du moyen de déplacement (5).

7. Appareil de commande destiné à un moyen de déplacement pour permettre d'optimiser le refroidissement d'un accumulateur haute tension (1) dans une installation de climatisation (2) du moyen de déplacement (5) qui est réalisé pour permettre :
- d'obtenir des grandeurs d'entrée,
- de produire des grandeurs de sortie,
- et sur le fondement de celles-ci :
- de mettre en oeuvre un procédé conforme à la l'une des revendications précédentes.
